# DEMANDE DE BREVET EUROPEEN

(11) **EP 4 822 999 A1**
(43) Date de publication de la demande: **14.10.2026**
(21) Numéro de dépôt: 26170600.6
(22) Date de dépôt: 02.04.2026
(51) Int. Cl.: H04B 5/77

(54) **DISPOSITIF NFC**

(30) Priorité: 11.04.2025 FR 2503873
(71) Demandeur: STMicroelectronics International N.V., 1228 Plan-les-Ouates, Geneva (CH)
(72) Inventeur: ENGELS, Sylvain, 38240 MEYLAN (FR); BANCIU, Andrei, 38610 GIERES (FR)
(74) Mandataire: Cabinet Beaumont

(57) **Abrégé**

La présente description concerne un dispositif NFC de type A comprenant un démodulateur de trames de type A configuré pour entraîner un réveil d'une unité de commande lorsqu'au moins un début de trame est détecté comme n'étant pas de type A.

## Description

### Domaine technique

La présente description concerne de façon générale des dispositifs NFC et leurs procédés de fonctionnement.

### Technique antérieure

Certains dispositifs NFC fonctionnent selon des types de technologies appelées type A ou B comme décrits dans la norme ISO 14443-3 ou encore selon le forum NFC. Les dispositifs NFC doivent, en fonction de leur spécification, pouvoir travailler avec l'une ou l'autre voire les deux technologies.

### Résumé de l'invention

Dans le cas de dispositifs NFC compatibles uniquement avec la technologie de type A (respectivement B), il existe un besoin de se prémunir du traitement de trames pouvant ressembler à des trames de type A (respectivement B) mais qui ne le sont pas ce qui peut conduire à un dysfonctionnement du dispositif NFC.

Dans le cas de dispositifs NFC compatibles avec les technologies de type A et B, il existe un besoin pour les dispositifs NFC de savoir différencier de façon robuste si les trames reçues appartiennent à un type A ou à un type B.

Un mode de réalisation pallie tout ou partie des inconvénients des dispositifs NFC connus.

Un mode de réalisation prévoit un dispositif NFC de type A comprenant un démodulateur de trames de type A configuré pour entraîner un réveil d'une unité de commande lorsqu'au moins un début de trame est détecté comme n'étant pas de type A.

Un mode de réalisation prévoit un procédé de fonctionnement d'un dispositif NFC de type A comprenant un démodulateur de trames de type A ;
le procédé comprenant le réveil, par le démodulateur, d'une unité de commande lorsqu'au moins un début de trame est détecté comme n'étant pas de type A.

Selon un mode de réalisation, pour entraîner le réveil de ladite unité de commande, le démodulateur modifie un état d'un premier signal.

Selon un mode de réalisation, ledit premier signal est appliqué sur une sortie d'erreur.

Selon un mode de réalisation, ladite sortie d'erreur est une sortie d'erreur d'un code de redondance cyclique.

Selon un mode de réalisation, ladite sortie d'erreur est une sortie d'erreur d'un code de correction d'erreur.

Selon un mode de réalisation, le démodulateur est configuré pour rejeter, ou ne pas traiter, la trame dont le début de trame a été détecté comme n'étant pas de type A.

Selon un mode de réalisation, une interruption est générée après le réveil de l'unité de commande.

Selon un mode de réalisation, après l'interruption, l'unité de commande analyse le contenu de la trame dont le début de trame a été détecté comme n'étant pas de type A et réalise une action.

Selon un mode de réalisation, le démodulateur est configuré pour analyser au moins deux symboles consécutifs pour détecter qu'un symbole de début de trame n'est pas de type A.

Selon un mode de réalisation, le démodulateur est configuré pour déterminer une première période de temps du début de trame s'écoulant entre un premier front descendant arrivant en premier et un premier front montant arrivant après ledit premier front descendant.

Selon un mode de réalisation, le démodulateur est configuré pour déterminer une deuxième période de temps du début de trame s'écoulant entre ledit premier front montant arrivant après le premier front descendant, et un deuxième front descendant arrivant après ledit premier front montant.

Selon un mode de réalisation, la première période de temps correspond à une première partie modulée et ledit deuxième front descendant correspond au début d'une deuxième partie modulée arrivant en deuxième après la première partie modulée.

Selon un mode de réalisation, le démodulateur est configuré pour vérifier les conditions suivantes selon lesquelles :
- ladite première période de temps est comprise dans un premier intervalle de temps ; et
- ladite deuxième période de temps est comprise dans un deuxième intervalle de temps ;
si une de ces conditions n'est pas respectée alors ledit début de trame est considéré comme n'étant pas de type A.

Selon un mode de réalisation, le premier et le deuxième intervalles de temps sont déterminés à partir de caractéristiques de début de trame définies dans la norme ISO 14443 ou du forum NFC auxquelles sont ajoutées ou retranchées des valeurs de temps respectives.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un système comprenant un dispositif NFC auquel peuvent s'appliquer les modes de réalisation décrits ;
la figure 2 représente un chronogramme d'un exemple de fonctionnement d'un dispositif NFC de la figure 1 ;
la figure 3 représente un chronogramme d'un exemple de fonctionnement d'un dispositif NFC de la figure 1 ;
la figure 4 représente un chronogramme de fonctionnement d'un dispositif NFC de la figure 1 ;
la figure 5 représente un procédé de fonctionnement d'un dispositif NFC de la figure 1 selon un mode de réalisation d'un premier aspect ;
la figure 6 représente un mode de réalisation d'une étape du procédé de la figure 5 ;
la figure 7 représente un procédé de fonctionnement d'un dispositif NFC de la figure 1 selon un deuxième aspect ;
   et
la figure 8 représente un mode de réalisation d'une étape du procédé de la figure 7.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais « coupled ») entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieur », « inférieur », etc., ou à des qualificatifs d'orientation, tels que les termes « horizontal », « vertical », etc., il est fait référence, sauf précision contraire, à l'orientation des figures.

Sauf précision contraire, les expressions « environ », « approximativement », « sensiblement », et « de l'ordre de » signifient à 10 % ou à 10° près, de préférence à 5 % ou à 5° près.

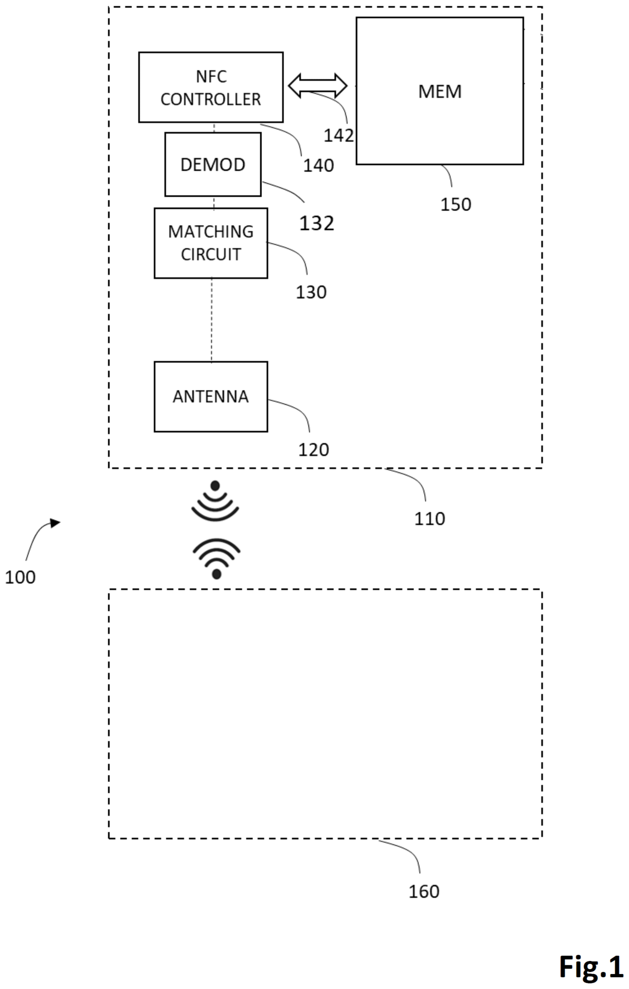

La figure 1 représente un système 100 comprenant un dispositif NFC 110, 160 auquel peuvent s'appliquer les modes de réalisation décrits.

Le système 100 comprend un premier dispositif NFC 110 qui peut communiquer avec un deuxième dispositif NFC 160. Cette technologie NFC (Near Field Communication en anglais) concerne l'établissement de communications à très courte distance (généralement moins de dix centimètres) entre ces deux dispositifs 110, 160.

Les systèmes NFC ou, en d'autres termes, les systèmes de communication en champ proche utilisent un champ électromagnétique radiofréquence généré par un des deux dispositifs 110, 160 mis en mode terminal ou lecteur pour communiquer avec l'autre dispositif 110, 160 mis en mode carte. L'inverse est également possible. Un même dispositif peut, notamment s'agissant de téléphones mobiles, fonctionner en mode lecteur en générant un champ destiné à un autre dispositif, ou en mode carte en captant un champ généré par un autre dispositif.

Pendant une transmission d'informations entre un des dispositifs 110, 160 en mode lecteur et l'autre dispositif 110, 160 en mode d'émulation de carte - ou d'étiquette (tag en anglais) -, le lecteur génère un champ magnétique par l'intermédiaire de son antenne, qui est généralement une onde sinusoïdale à 13,56 MHz dans les normes utilisées classiquement. Une modulation en amplitude peut être utilisée pour le codage de la communication.

Cette technologie NFC permet également à un dispositif NFC de recharger un ou plusieurs autres dispositifs NFC placés à proximité.

Dans la présente description, on considère deux aspects :
- un premier aspect dans lequel au moins l'un des dispositifs NFC 110, 160 est compatible avec la technologie de type A seulement (selon le Forum NFC ou la norme ISO 14443-3), et
- un deuxième aspect dans lequel au moins l'un des deux dispositifs NFC 110, 160 est compatible avec les technologies de types A et B.

Dans l'exemple de la figure 1, le dispositif NFC 110 comprend un circuit d'adaptation 130 (MATCHING CIRCUIT) couplant une antenne 120 (ANTENNA) à un circuit démodulateur, autrement appelé démodulateur 132 (DEMOD) ou décodeur. Le démodulateur est par exemple un décodeur radiofréquence capable de transformer un signal analogique reçu en un autre signal analogique ou numérique prêt pour le décodage. Le démodulateur 132 relie par exemple le circuit d'adaptation d'impédance 130 à une unité de commande autrement appelée contrôleur NFC 140 (NFC CONTROLLER). Le démodulateur 132 intègre par exemple un démodulateur de type A et/ou un démodulateur de type B. Dans un exemple non-illustré facultatif, le dispositif NFC 110, 160 comprend un détecteur de type de trames A ou B ou autre. Ce détecteur fait par exemple partie du démodulateur 132. Le détecteur est par exemple relié au démodulateur 132 et/ou au contrôleur NFC 140.

L'unité de commande ou contrôleur NFC 140 est par exemple assimilée à une unité de traitement contenant par exemple un microprocesseur relié en outre à une ou plusieurs mémoires 150 (MEM), qui sont par exemple des mémoires volatiles ou non volatiles, par l'intermédiaire d'un bus de communication 142. La mémoire 150 comprend par exemple des registres pour stocker les configurations du contrôleur NFC 140 ou stocker par exemple des informations relatives à la communication NFC, comme par exemple des données issues du décodage radiofréquence. Dans un exemple, la mémoire 150 est par exemple une mémoire volatile de type RAM. Dans un autre exemple, le contrôleur NFC 140 est configuré pour exécuter un ou plusieurs programmes.

Dans un exemple, l'un des deux dispositifs 110 ou 160 n'a pas d'alimentation et est alimenté par le champ électromagnétique de l'autre dispositif mis en mode de lecteur (proximity coupling device, PCD, en anglais).

L'un des dispositifs NFC 110 ou le dispositif 160 est par exemple un téléphone ou un téléphone intelligent, smartphone, ou un terminal, émulé en mode lecteur.

Cela permet d'échanger des informations entre l'un des dispositifs NFC fonctionnant comme un lecteur sans contact et des éléments sécurisés situés dans l'autre dispositif NFC par exemple. De nombreuses applications sont ainsi possibles, telles que la billetterie mobile pour les transports publics (le téléphone mobile servant de titre de transport) ou le paiement mobile (le téléphone mobile servant de carte de paiement).

Dans un exemple, l'ensemble des blocs 130, 132, 140, 142, 150, sont compris dans un microcontrôleur.

Les communications NFC sont par exemple divisées en plusieurs phases, une phase appelée IDLE, suivie d'une phase de début de communication, suivie d'une phase d'information de trame et enfin une phase de fin de communication.

Par exemple, dans un mode de carte à couplage inductif de proximité (PICC), l'un des deux dispositifs 110 ou 160 fonctionne en tant que carte à couplage inductif de proximité et rentre dans un champ électromagnétique généré par l'autre dispositif mis en mode lecteur (PCD). Lorsque le champ électromagnétique du lecteur dépasse une certaine valeur, alors la phase IDLE est réalisée. La première trame attendue après la phase IDLE est appelée trame courte (short frame en anglais) . Elle a un format spécifique comprenant une condition de démarrage, sept bits et une condition de fin. La condition de démarrage, aussi appelée symbole de début de trame, ou symbole de démarrage (Start of frame, SoF en anglais), est caractérisée par une forme du signal différente en fonction de la technologie A ou de la technologie B.

La phase, ou état, appelée IDLE, est une phase dite inactive. Dans l'état IDLE, le dispositif PICC est alimenté par le champ électromagnétique de l'autre dispositif NFC. Le dispositif PICC est à l'écoute de commandes appelées REQA et WUPA (respectivement REQB, WUPB pour le type B) dans les normes. Lorsque ces commandes sont reçues de façon valide et qu'une réponse de requête appelé ATQA (respectivement ATQB) a été envoyée vers l'autre dispositif, alors une phase, ou état, appelée READY dans les normes est mise en œuvre.

Dans la phase READY, un bit d'anticollision est appliqué et un identifiant unique UID est obtenu. Lorsque l'identifiant unique est sélectionné alors une phase, ou état, d'activation, appelée ACTIVE dans les normes, est mise en œuvre.

Dans la phase ACTIVE, le dispositif en mode PICC peut accepter de recevoir des commandes d'activation de protocole RATS ou de procéder selon d'autres méthodes.

Après la phase d'activation ACTIVE une autre phase dite de protocole PROTOCOL est mise en œuvre dans laquelle le dispositif en mode PICC est alimenté par les ondes électromagnétiques de l'autre dispositif, et une communication s'établit selon un type de protocole de communication défini par des données d'information de type de protocole. Dans l'état ou phase PROTOCOL le format attendu des trames reçues est un format dit standard comprenant au minimum un octet, des bits de parité et un code de redondance cyclique codés sur deux octets.

Il convient de se référer à la norme ISO 14443-3 par exemple pour avoir tous les détails d'implémentation de ces différentes phases ou états.

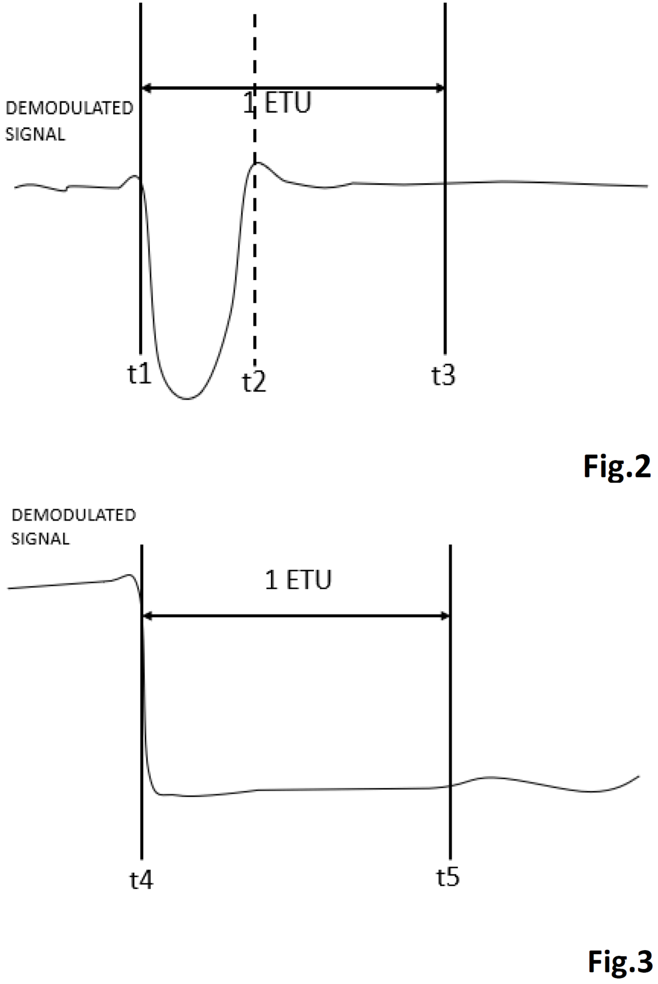

La figure 2 représente un chronogramme d'un exemple de fonctionnement d'un dispositif NFC de la figure 1.

Plus particulièrement, la figure 2 représente un symbole de démarrage de trame SoF, une fois que le signal NFC 13,56MHz a été démodulé (démodulation d'amplitude AM, DEMODULATED SIGNAL), et correspondant à la technologie A.

Dans l'exemple représenté en figure 2, avant un temps t1, le signal est à un niveau haut, puis, au temps t1, le niveau du signal descend brusquement à un niveau bas et y reste jusqu'à un temps t2. Au temps t2, le niveau du signal remonte au niveau haut et y reste jusqu'à au moins un temps t3. La période de temps entre t1 et t3 correspond à une période de temps pendant laquelle la forme du symbole SoF est recherchée. Cette période de temps correspond à une unité élémentaire de temps (Elementary time unit, ETU, en anglais). En d'autres termes, au vu de la modulation du signal de base, le symbole de démarrage de type A correspond à une modulation à l'état bas pendant moins de 50% du temps de l'unité élémentaire de temps. Cette durée est appelée PauseA dans la norme ISO 14443-3.

La figure 3 représente un chronogramme d'un exemple de fonctionnement d'un dispositif NFC de la figure 1.

Plus particulièrement, la figure 3 représente un symbole de démarrage de la technologie B, une fois que le signal NFC 13,56MHz a été démodulé (démodulation d'amplitude AM, DEMODULATED SIGNAL).

Dans l'exemple représenté en figure 3, avant un temps t4, le signal est à un niveau haut, puis, au temps t4, le niveau du signal descend brusquement à un niveau bas et y reste jusqu'à au moins un temps t5. La période de temps entre les temps t4 et t5 correspond à une période de temps pendant laquelle la forme du symbole est recherchée. Cette période de temps correspond à une unité élémentaire de temps. En d'autres termes, au vu de la modulation du signal de base, le symbole de démarrage de type B correspond à une modulation à l'état bas pendant 100% du temps de l'unité élémentaire de temps.

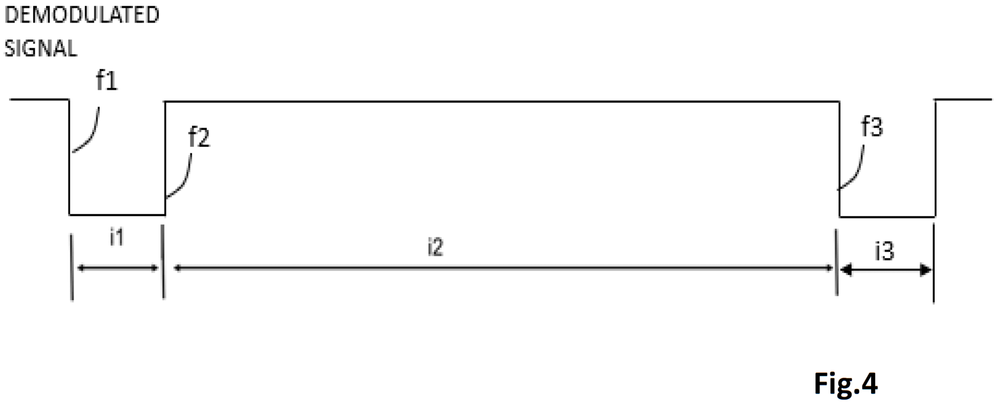

La figure 4 représente un chronogramme de fonctionnement d'un dispositif NFC 110, 160 de la figure 1.

Plus particulièrement, la figure 4 représente un chronogramme d'un signal de base reçu par l'un des deux dispositifs NFC 110, 160 en mode carte, une fois que le signal NFC 13,56MHz a été démodulé (démodulation d'amplitude AM, DEMODULATED SIGNAL). Dans l'exemple représenté, une première partie modulée (i1) représente un premier symbole arrivant en premier, et une deuxième partie modulée (i3) représente un deuxième symbole arrivant successivement après le premier symbole.

Dans l'exemple représenté, une période temps i1 correspond à une période de temps entre un front descendant f1 arrivant en premier et un front montant f2 arrivant juste après le front descendant f1.

Dans l'exemple représenté, une période temps i2 correspond à une période de temps entre le front montant f2 et un deuxième front descendant f3 arrivant après le front montant f2. Le front descendant f3 correspond par exemple au début de la partie modulée du deuxième symbole arrivée successivement.

L'analyse du chronogramme de la figure 4 permet par exemple à un décodeur ou démodulateur 132 analysant uniquement les front descendants f1 et f3 de reconnaître de quel type sont les trames reçues.

Néanmoins, il se peut par exemple que le symbole de démarrage de type B, reçu par un démodulateur n'acceptant que la technologie de type A et ne détectant que les fronts descendants, comprenne un artefact (glitch en anglais) qui fasse descendre le signal de base à un niveau bas momentanément avant de remonter. Ceci peut faire croire, à ce démodulateur n'acceptant que la technologie de type A et ne détectant que les fronts descendants, que la trame reçue est de type A alors qu'elle est de type B. La réception d'un symbole de démarrage a lieu dans une phase où le contrôleur NFC 140 est en veille, il n'y a donc pas d'action du contrôleur NFC et une situation inextricable de blocage peut alors se mettre en place.

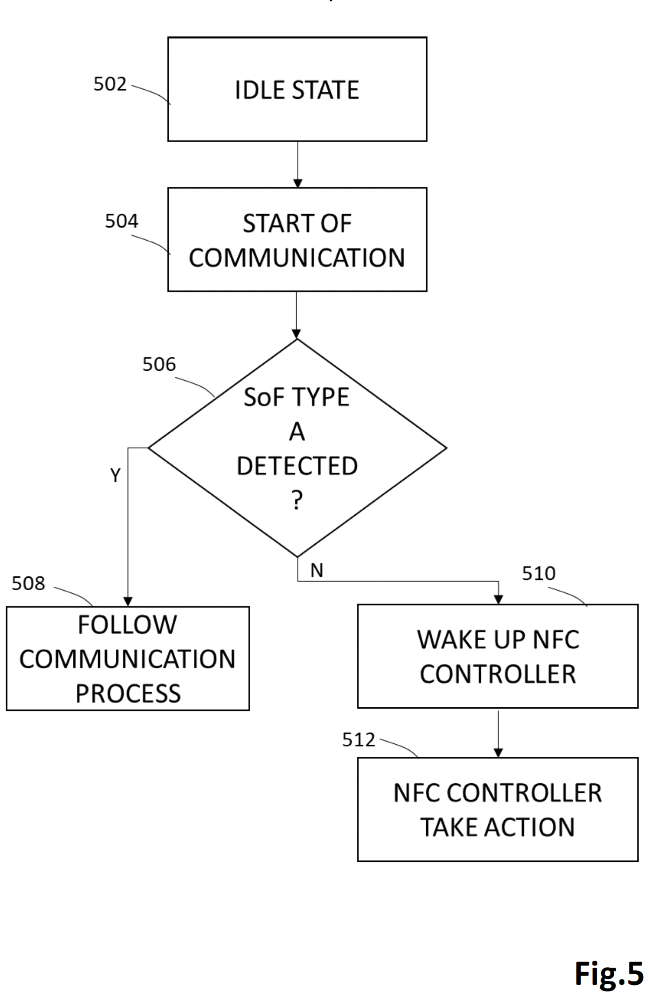

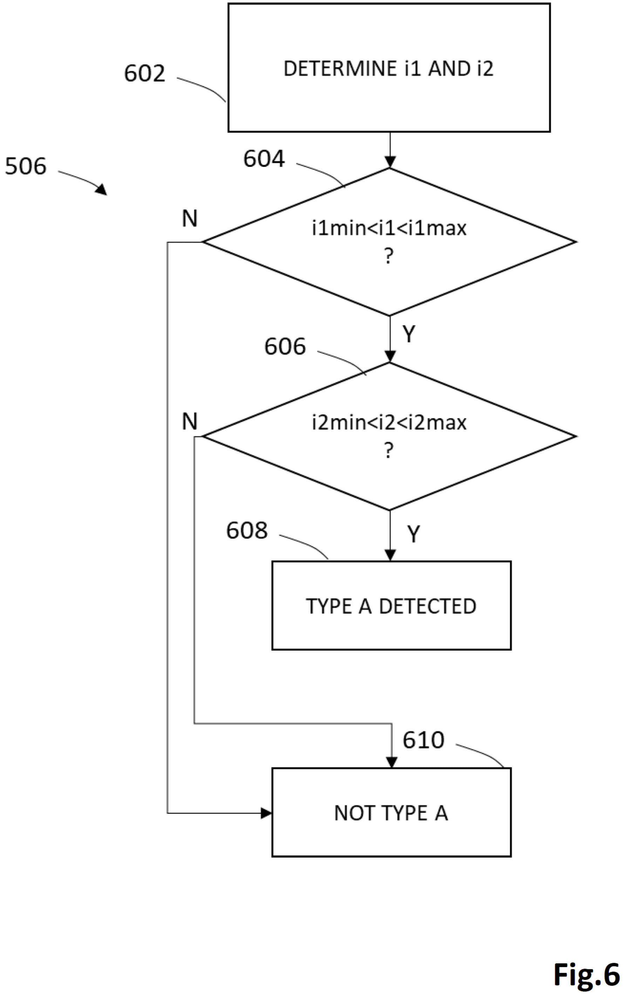

Cette problématique est adressée par le premier aspect illustré dans les exemples des figures 5 et 6.

Les modes de réalisations présentés en rapport au premier aspect prévoient ainsi un dispositif NFC de type A comprenant un démodulateur de trames de type A configuré pour entraîner un réveil de l'unité de commande lorsqu'au moins un début de trame (SoF) est détecté comme n'étant pas de type A.

Autrement dit, dans le premier aspect, le dispositif NFC de type A comprend un démodulateur de trames de type A configuré pour entraîner un réveil du contrôleur NFC lorsqu'au moins un symbole de démarrage trame (SoF) est détecté comme n'étant pas de type A.

Le réveil du contrôleur NFC, autrement dit de l'unité de commande, permet de prendre une action pour sortir d'une éventuelle situation de blocage.

En s'appuyant sur la reconnaissance de symbole de début de trame, autrement dit le symbole de démarrage SoF, il est possible de réagir au plus vite dès réception des trames.

La figure 5 représente un procédé de fonctionnement d'un dispositif NFC 110, 160 de la figure 1 selon un mode de réalisation du premier aspect. Dans cet exemple, le dispositif NFC est de type A seulement.

Dans une étape 502 (IDLE STATE), le dispositif NFC 110, 160 est dans l'état IDLE.

Dans une étape 504 (START OF COMMUNICATION), postérieure à l'étape 502, le contrôleur NFC, autrement dit l'unité de commande, 140, est en veille. Le décodeur ou démodulateur 132 reçoit des trames par exemple courtes.

Dans une étape 506 (SoF TYPE A DETECTED ?), le démodulateur 132 détermine si le symbole de démarrage est de type A. Cette détermination consiste à repérer un symbole de début (ou dit de démarrage), qui soit ressemblant à celui illustré à la figure 2.

Dans le cas où le symbole de démarrage est de type A (branche Y) alors une étape 508 (FOLLOW COMMUNICATION PROCESS) est mise en œuvre.

Dans le cas où le symbole de démarrage n'est pas reconnu comme étant de type A (branche N) alors une étape 510 (WAKE UP NFC CONTROLLER) est mise en œuvre.

Dans l'étape 508, le processus de communication continue sans réveil du contrôleur NFC par exemple. Les phases ou états READY et ACTIVE sont ainsi par exemple mis en œuvre ensuite.

L'étape 510 consiste par exemple à ce que le démodulateur 132 entraîne le réveil du contrôleur NFC en modifiant un état d'un premier signal. Ce premier signal est par exemple appliqué sur une sortie d'erreur. Cette sortie d'erreur est par exemple une sortie d'erreur d'un code de redondance cyclique (CRC). La sortie d'erreur est, dans un autre exemple, une sortie d'erreur d'un code de correction d'erreur (ECC) .

Le fait de modifier un état d'un signal sur ce genre de sorties d'erreur permet de simuler une erreur alors qu'il ne s'agit ni d'une erreur de type CRC, ni d'une erreur ECC. Ici, on se sert du fait qu'une erreur de type CRC ou ECC implique normalement le réveil du contrôleur NFC pour réveiller le contrôleur NFC. En effet, les normes ISO 14443 ou le NFC Forum, ne donne pas ce genre de possibilité de réveil.

Dans une étape 512 (NFC CONTROLLER TAKE ACTION), postérieure à l'étape 510, le contrôleur NFC 140 analyse par exemple le symbole de démarrage et réalise une action, pour débloquer la situation, par exemple en ignorant ou rejetant, la trame reçue avec le symbole de démarrage qui n'est pas de type A.

La robustesse de détection du symbole de démarrage de type A peut être améliorée afin de s'assurer de façon quasi certaine qu'à l'étape 506 le symbole de démarrage est bien de type A ou ne l'est pas.

Pour ce faire il serait possible par exemple d'ajouter un autre démodulateur, celui-ci dédié uniquement au type B. Mais cela entraîne un surcoût, une consommation plus élevée d'énergie et cela complexifie le fonctionnement du dispositif NFC.

La figure 6 représente un mode de réalisation d'une étape du procédé de la figure 5. Plus particulièrement, la figure 6 propose un procédé pour rendre robuste l'identification du type de trame par l'identification d'un symbole de début ou de démarrage SoF de type A lors de l'étape 506 de la figure 5.

Dans une étape 602 (DETERMINE i1 AND i2) de l'étape 506, les périodes de temps i1 et i2 illustrées en figure 4 sont déterminées. Dans un exemple, cette détermination est faite à partir de deux trames successives.

Dans une étape 604 (i1min<i1<i1max?) de l'étape 506, postérieure à l'étape 602, le démodulateur 132 vérifie que la période de temps i1 est comprise dans un premier intervalle de temps i1min, i1max. Le premier intervalle de temps est par exemple déterminé à partir de caractéristiques de symbole de démarrage SoF définies dans la norme ISO 14443 ou du forum NFC auxquelles sont ajoutées ou retranchées des valeurs de temps respectives.

Si la période de temps i1 n'est pas comprise dans le premier intervalle de temps (branche N) alors une étape 610 (NOT TYPE A) est mise en œuvre.

Si la période de temps i1 est comprise dans le premier intervalle de temps (branche Y), alors une étape 606 (i2min<i2<i2max?) est mise en œuvre dans laquelle le démodulateur 132 vérifie que la deuxième période de temps i2 est comprise dans un deuxième intervalle de temps i2min, i2max. Le deuxième intervalle de temps est par exemple déterminé à partir de caractéristiques de symbole de démarrage SoF définies dans la norme ISO 14443 ou du forum NFC auxquelles sont ajoutées ou retranchées des valeurs de temps respectives.

Si le résultat de l'étape 606 est positif (branche Y), alors une étape 608 (TYPE A DETECTED) est mise en œuvre dans laquelle le type A est considéré comme détecté.

Si le résultat de l'étape 606 est négatif (branche N), alors l'étape 610 (NOT TYPE A) est mise en œuvre. Dans cette étape, la trame reçue est considérée comme n'étant pas de type A.

L'exemple de la figure 6 permet d'améliorer la robustesse de détection du symbole de démarrage SoF de trame du type A ce qui permet de ne pas réveiller trop souvent le contrôleur NFC.

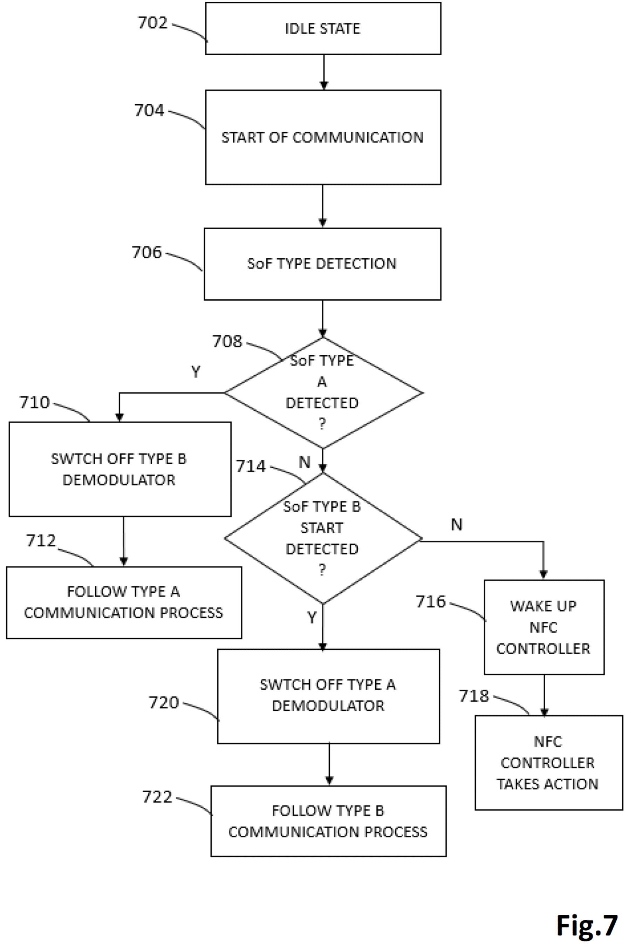

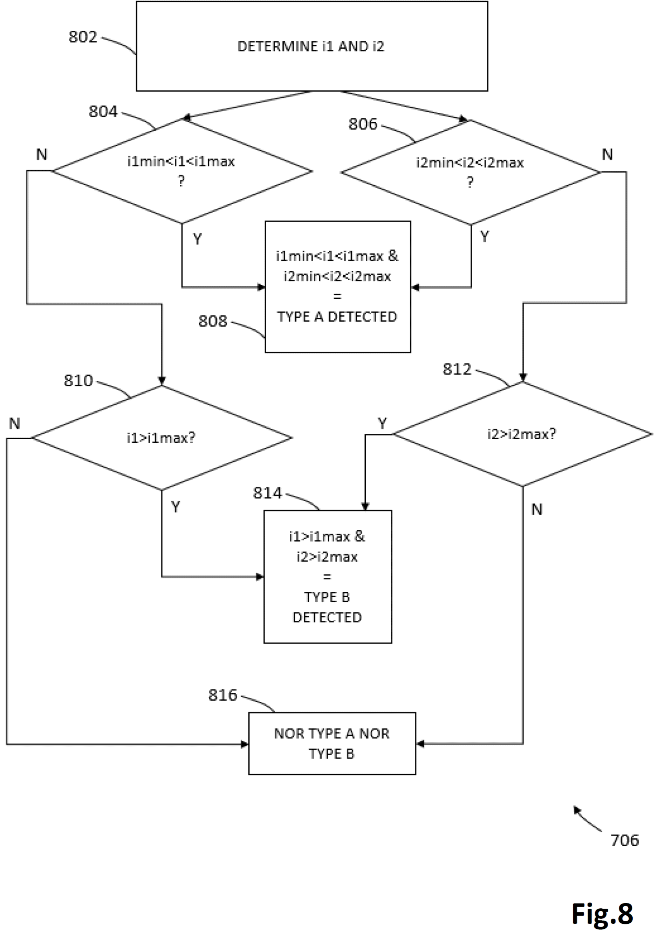

Les figures 7 et 8 concernent le deuxième aspect.

Le deuxième aspect traite du cas où au moins l'un des dispositifs NFC 110, 160 doit être capable de traiter les technologies de type A et B.

Une problématique de ce deuxième aspect est de pouvoir déterminer de façon robuste et fiable le type des trames reçues.

Pour ce faire, les modes de réalisation décrits ci-après proposent un dispositif NFC de type A et B, comprenant un premier démodulateur de trames de type A, un deuxième démodulateur de trames de type B, et un détecteur de type de trames reçues configuré pour :
- déterminer une première période de temps (i1) d'un début de trame (SoF), s'écoulant entre un premier front descendant arrivant en premier, et un premier front montant arrivant après ledit premier front descendant ;
- déterminer une deuxième période de temps (i2) dudit début de trame (SoF), s'écoulant entre ledit premier front montant arrivant après le premier front descendant, et un deuxième front descendant arrivant après ledit premier front montant ; et
- déduire, en fonction des valeurs de la première et de la deuxième périodes de temps calculées (i1, i2), le type de trames reçues.

La figure 7 représente un procédé de fonctionnement d'un dispositif NFC de la figure 1 selon le deuxième aspect.

Dans l'exemple illustré, dans une étape 702 (IDLE STATE) le dispositif NFC est en mode de carte et dans l'état IDLE.

Dans une étape 704 (START OF COMMUNICATION), postérieure à l'étape 702, le contrôleur NFC, autrement dit l'unité de commande, 140, est en veille. Les décodeurs de type A et B du démodulateur 132 reçoivent des trames par exemple courtes.

Dans une étape 706 (SoF TYPE DETECTION), postérieure à l'étape 704 ou concomitante avec celle-ci, le détecteur (ou le démodulateur 132) de type de trame analyse les trames reçues. Cette détection consiste par exemple à déterminer les périodes i1 et i2 de la figure 4 pour en déduire le type de trame.

Dans une étape 708 (SoF TYPE A DETECTED ?), postérieure à l'étape 708, si la trame détectée est de type A (branche Y) alors une étape 710 (SWTCH OFF TYPE B DEMODULATOR) est mise en œuvre.

Dans l'étape 710, le démodulateur de trames de type B est mis en veille. Cela permet d'économiser de l'énergie. Une étape 712 (FOLLOW TYPE A COMMUNICATION PROCESS) est ensuite mise en œuvre dans laquelle le processus de communication continue avec le type A. Dans l'étape 712 les états READY, ACTIVE et PROTOCOL peuvent se succéder.

Dans l'étape 708 (SoF TYPE A DETECTED ?), si la trame détectée n'est pas détectée comme étant de type A (branche N) alors une étape 714 (SoF TYPE B START DETECTED ?) est mise en œuvre.

Dans l'étape 714, si la trame détectée est de type B (branche Y) alors une étape 720 (SWTCH OFF TYPE A DEMODULATOR) est mise en œuvre. Si la trame détectée n'est pas considérée comme étant de type B (branche N) alors une étape 716 (WAKE UP NFC CONTROLLER) est mise en œuvre.

Dans l'étape 716, le contrôleur NFC est par exemple réveillé, s'il était éteint auparavant, de sorte à mettre en œuvre une étape 718 (NFC CONTROLLER TAKES ACTION) dans laquelle il prend par exemple des contremesures après analyse des trames reçues. Dans un autre exemple, dans l'étape 718, les trames sont rejetées ou aucune action n'est prise par le contrôleur NFC.

Dans l'étape 720, le démodulateur de trames de type A est mis en veille. Cela permet d'économiser de l'énergie. Une étape 722 (FOLLOW TYPE B COMMUNICATION PROCESS) est ensuite mise en œuvre dans laquelle le processus de communication continue avec le type B. Dans l'étape 722, les états READY, ACTIVE et PROTOCOL peuvent se succéder.

La figure 8 représente un mode de réalisation d'une étape du procédé de la figure 7. Plus particulièrement, la figure 8 décrit un mode de réalisation de l'étape 706.

Dans une étape 802 (DETERMINE i1 AND i2) de l'étape 706, les périodes de temps i1 et i2 sont déterminées, soit par un ou les décodeurs/démodulateurs 132 ou soit par le détecteur par exemple.

Dans une étape 804 (i1min<i1<i1max?) de l'étape 706, postérieure à l'étape 802, le ou les décodeurs/démodulateurs 132 ou le détecteur, vérifie que la période de temps i1 est comprise dans un premier intervalle de temps i1min, i1max. Le premier intervalle de temps est par exemple déterminé à partir de caractéristiques de symbole de démarrage SoF définies dans la norme ISO 14443 ou du forum NFC auxquelles sont ajoutées ou retranchées des valeurs de temps respectives.

Dans une étape 806 (i2min<i2<i2max?) de l'étape 706, se déroulant en même temps ou de façon décalée dans le temps par rapport à l'étape 804, le ou les décodeurs/démodulateurs 132 ou le détecteur, vérifie que la deuxième période de temps i2 est comprise dans un deuxième intervalle de temps i2min, i2max. Le deuxième intervalle de temps est par exemple déterminé à partir de caractéristiques de symbole de démarrage SoF définies dans la norme ISO 14443 ou du forum NFC auxquelles sont ajoutées ou retranchées des valeurs de temps respectives.

Si i1 est comprise dans le premier intervalle de temps et si i2 est également comprise dans le deuxième intervalle de temps (branches Y des étapes 804 et 806), alors une étape 808 (i1min<i1<i1max & i2min<i2<i2max = TYPE A DETECTED) est mise en œuvre dans laquelle la trame est considérée comme étant du type A.

Dans le cas où i1 n'est pas comprise dans le premier intervalle de temps (branche N de l'étape 804), une étape 810 (i1>i1max ?) est mise en œuvre.

Dans l'étape 810, le ou les décodeurs/démodulateurs 132 ou le détecteur, compare i1 à la borne supérieure i1max du premier intervalle. Si i1 est inférieur à i1max (branche Y) (branche N) alors cela signifie que i1 est inférieur à la borne inférieure i1min du premier intervalle et une étape 816 (NO TYPE A NO TYPE B) est mise en œuvre.

Dans le cas où i2 n'est pas comprise dans le deuxième intervalle de temps (branche N de l'étape 806), une étape 812 (i2>i2max ?) est mise en œuvre. Dans l'étape 812, le ou les décodeurs/démodulateurs 132 ou le détecteur, compare i2 à la borne supérieure i2max du deuxième intervalle. Si i2 est supérieure à i2max (branche Y) et que i1 est supérieure à i1max (branche Y de l'étape 810), alors l'étape 814 (i1>i1max & i2>i2max = TYPE B DETECTED) est mise en œuvre.

Si dans l'étape 812, i2 est inférieure à i2max (branche N) alors cela signifie que i2 est inférieure à la borne inférieure i2min du deuxième intervalle et l'étape 816 (NOR TYPE A NOR TYPE B) est mise en œuvre.

Dans l'étape 816, la trame reçue est considérée comme n'étant ni du type A ni du type B.

L'exemple de la figure 8 permet une détection robuste et rapide du type de trame car elle est basée sur l'analyse du symbole de début ou démarrage. Le fait d'utiliser les fronts descendants successifs f1, f3 et le front montant f2 intercalaire permet d'être plus précis que des méthodes n'utilisant que des fronts descendants. Le fait d'utiliser le front descendant f3 qui fait partie d'une deuxième trame successive permet ainsi de gagner en précision de détection et de ne pas interpréter une trame de type B erronée comme étant une trame de type A.

Les exemples de réalisations suivants sont relatifs au deuxième aspect.

Example 1 : Dispositif NFC de type A et B, comprenant un premier démodulateur de trames de type A, un deuxième démodulateur de trames de type B, et un détecteur de type de trames reçues configuré pour :
- déterminer une première période de temps (i1) d'un début de trame (SoF), s'écoulant entre un premier front descendant arrivant en premier, et un premier front montant arrivant après ledit premier front descendant ;
- déterminer une deuxième période de temps (i2) dudit début de trame (SoF), s'écoulant entre ledit premier front montant arrivant après le premier front descendant, et un deuxième front descendant arrivant après ledit premier front montant ; et
- déduire en fonction des valeurs de la première et de la deuxième périodes de temps calculées (i1, i2), le type de trames reçues.

Exemple 2 : Procédé de fonctionnement d'un dispositif NFC de type A et B, comprenant un premier démodulateur de trames de type A, un deuxième démodulateur de trames de type B, et un détecteur de type de trames reçues, le procédé comprenant :
- déterminer, avec le détecteur, une première période de temps (i1) d'un début de trame (SoF), s'écoulant entre un premier front descendant arrivant en premier, et un premier front montant arrivant après ledit premier front descendant ;
- déterminer, avec le détecteur, une deuxième période de temps (i2) dudit début de trame (SoF), s'écoulant entre ledit premier front montant arrivant après le premier front descendant, et un deuxième front descendant arrivant après ledit premier front montant ; et
- déduire, avec le détecteur, en fonction des valeurs de la première et de la deuxième périodes de temps calculées (i1, i2), le type de trames reçues.

Exemple 3 : Dispositif selon l'exemple 1 ou procédé selon l'exemple 2, dans lequel le détecteur compare ladite première période de temps (i1) à un premier intervalle de temps (i1min, i1max) et ladite deuxième période de temps (i2) à un deuxième intervalle de temps (i2min, i2max).

Exemple 4 : Dispositif ou procédé selon l'exemple précédent, dans lequel le premier et le deuxième intervalles de temps (i1min, ilmax ; i2min, i2max) sont déterminés à partir de caractéristiques de symbole de trame définies dans la norme ISO 14443 ou du forum NFC auxquelles sont ajoutées ou retranchées des valeurs de temps respectives.

Exemple 5 : Dispositif ou procédé selon l'exemple 3 ou 4, dans lequel si ladite première période de temps (i1) est comprise dans le premier intervalle de temps, et si ladite deuxième période de temps (i2) est comprise dans le deuxième intervalle de temps, alors les trames reçues sont considérées comme étant de type A.

Exemple 6 : Dispositif ou procédé selon l'un quelconque des exemples 3 à 5, dans lequel si ladite première période de temps (i1) est supérieure à une borne maximale du premier intervalle de temps et si la deuxième période de temps (i2) est supérieure à une borne maximale du deuxième intervalle de temps, alors les trames reçues sont considérées comme étant de type B.

Exemple 7 : Dispositif ou procédé selon l'exemple 5 ou 6, dans lequel, si les trames reçues sont considérées comme étant du type A alors le deuxième démodulateur est désactivé.

Exemple 8 : Dispositif ou procédé selon l'exemple 6 ou 7, dans lequel, si les trames reçues sont considérées comme étant du type B alors le deuxième démodulateur est désactivé.

Exemple 9 : Dispositif ou procédé selon l'exemple 7 ou 8, dans lequel le détecteur est configuré pour réveiller une unité de commande (CPU) lorsque l'un des types A ou B est détecté.

Exemple 10 : Dispositif ou procédé selon l'un quelconque des exemples 3 à 9, dans lequel si ladite première période de temps (i1) est inférieure à une borne minimale du premier intervalle de temps ou si la deuxième période de temps (i2) est inférieure à une borne minimale du deuxième intervalle de temps, alors les trames reçues sont considérées comme étant différentes du type A ou du type B.

Exemple 11 : Dispositif ou procédé selon l'exemple 10 dans sa dépendance à l'exemple 9, dans lequel le détecteur est configuré pour modifier un état d'un premier signal de sorte à entraîner un réveil de l'unité de commande lorsque les trames reçues sont considérées comme étant différentes du type A ou du type B.

Exemple 12 : Dispositif ou procédé selon l'exemple 10 dans sa dépendance à l'exemple 9, dans lequel le détecteur est configuré pour ne pas réveiller l'unité de commande si les trames reçues sont considérées comme étant différentes du type A ou du type B.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, dans l'exemple de la figure 6, les étapes 604 et 606 peuvent être interverties de sorte que si les premières et deuxièmes périodes de temps ne sont pas respectivement comprises dans le premier et deuxième intervalles de temps, alors le symbole de démarrage SoF de trame n'est pas de type A.

Enfin, la mise en œuvre pratique des modes de réalisation et variantes décrits est à la portée de la personne du métier à partir des indications fonctionnelles données ci-dessus. En particulier, pour ce qui est de l'exemple de la figure 5 qui a été décrit par rapport à la détection de trame n'étant pas du type A, la personne du métier pourra utiliser le même raisonnement dans le cas d'un dispositif NFC compatible uniquement avec le type B. Dans ce cas-là l'étape 506 de la figure 5 consistera à vérifier si le symbole de démarrage SoF est de type B. Il sera également possible pour la personne du métier d'adapter l'algorithme de la figure 6 à la détection du symbole de démarrage de trame de type B.

## Revendications

1. Dispositif NFC (110, 160) de type A comprenant un démodulateur (132) de trames de type A configuré pour entraîner un réveil d'une unité de commande (140) lorsqu'au moins un début de trame (SoF) est détecté comme n'étant pas de type A.

2. Procédé de fonctionnement d'un dispositif NFC (110, 160) de type A comprenant un démodulateur (132) de trames de type A ;
le procédé comprenant le réveil, par le démodulateur (132), d'une unité de commande (140) lorsqu'au moins un début de trame (SoF) est détecté comme n'étant pas de type A.

3. Dispositif selon la revendication 1, ou procédé selon la revendication 2, dans lequel, pour entraîner le réveil de ladite unité de commande (140), le démodulateur (132) modifie un état d'un premier signal.

4. Dispositif ou procédé selon la revendication 3, dans lequel ledit premier signal est appliqué sur une sortie d'erreur.

5. Dispositif ou procédé selon la revendication 4, dans lequel ladite sortie d'erreur est une sortie d'erreur d'un code de redondance cyclique (CRC).

6. Dispositif ou procédé selon la revendication 4, dans lequel ladite sortie d'erreur est une sortie d'erreur d'un code de correction d'erreur (ECC).

7. Dispositif selon l'une quelconque des revendications 1 ou 3 à 6, ou procédé selon l'une quelconque des revendications 2 à 6, dans lequel le démodulateur (132) est configuré pour rejeter, ou ne pas traiter, la trame dont le début de trame (SoF) a été détecté comme n'étant pas de type A.

8. Dispositif selon l'une quelconque des revendications 1 ou 3 à 7, ou procédé selon l'une quelconque des revendications 2 à 7, dans lequel une interruption est générée après le réveil de l'unité de commande (140).

9. Dispositif ou procédé selon la revendication 8, dans lequel, après l'interruption, l'unité de commande (140) analyse le contenu de la trame dont le début de trame (SoF) a été détecté comme n'étant pas de type A et réalise une action.

10. Dispositif selon l'une quelconque des revendications 1 ou 3 à 9, ou procédé selon l'une quelconque des revendications 2 à 9, dans lequel le démodulateur (132) est configuré pour analyser au moins deux symboles consécutifs pour détecter qu'un symbole de début de trame (SoF) n'est pas de type A.

11. Dispositif ou procédé selon la revendication 10, dans lequel le démodulateur est configuré pour déterminer une première période de temps (i1) du début de trame (SoF) s'écoulant entre un premier front descendant arrivant en premier et un premier front montant arrivant après ledit premier front descendant.

12. Dispositif ou procédé selon la revendication 11, dans lequel le démodulateur est configuré pour déterminer une deuxième période de temps (i2) du début de trame (SoF) s'écoulant entre ledit premier front montant arrivant après le premier front descendant, et un deuxième front descendant (f3) arrivant après ledit premier front montant.

13. Dispositif ou procédé selon la revendication 12, dans lequel la première période de temps (i1) correspond à une première partie modulée et ledit deuxième front descendant (f3) correspond au début d'une deuxième partie modulée arrivant en deuxième après la première partie modulée.

14. Dispositif ou procédé selon la revendication 13, dans lequel le démodulateur (132) est configuré pour vérifier les conditions suivantes selon lesquelles :
- ladite première période de temps (i1) est comprise dans un premier intervalle de temps (i1min, i1max) ; et
- ladite deuxième période de temps (i2) est comprise dans un deuxième intervalle de temps (i2min, i2max) ;
si une de ces conditions n'est pas respectée alors ledit début de trame (SoF) est considéré comme n'étant pas de type A.

15. Dispositif ou procédé selon la revendication 14, dans lequel le premier et le deuxième intervalles de temps (i1min, i1max ; i2min, i2max) sont déterminés à partir de caractéristiques de début de trame (SoF) définies dans la norme ISO 14443 ou du forum NFC auxquelles sont ajoutées ou retranchées des valeurs de temps respectives.
